# EUROPEAN PATENT APPLICATION

(11) **EP 3 670 218 A1**
(43) Date of publication of application: **24.06.2020**
(21) Application number: 18213947.7
(22) Date of filing: 19.12.2018
(51) Int. Cl.: B60H 3/00, B60H 1/00

(54) **VEHICLE WITH IONIZING UNIT FOR CLEANING AIR TO CABIN**

(71) Applicant: Blueair Cabin Air AB, 115 26 Stockholm (SE)
(72) Inventor: WENNERSTRÖM, Johan, 192 26 Sollentuna (SE); WETTRE, Lars, 117 40 Stockholm (SE); HELIN, Emil, 116 28 Stockholm (SE); DAHLGREN, Carl Johan, 120 61 Stockholm (SE); ODELROS, David Marcus, 182 35 Danderyd (SE); FODOR, Attila, 147 32 Tumba (SE)
(74) Representative: Zacco Sweden AB

(57) **Abstract**

Apparatus (1) for an air purifying system comprising a fresh air intake (7) and a recirculation air intake (9), an air outlet and a recirculation valve (8), said fresh air intake comprising an ioniser (11,12,13) and a filter (6) at least partially filling the air outlet and a vehicle comprising such an apparatus.

## Description

The invention relates to an apparatus for improving air purification in a vehicle.

Despite the prior art there remains a need for improved air purification devices in vehicles.

Accordingly, the present invention provides an apparatus for an air purifying system comprising a fresh air intake, an air outlet and a recirculation valve, said fresh air intake comprising an ioniser.

The apparatus of the invention engages with or forms a part of a Heating, Ventilation and Air Conditioning (HVAC) system and provides a means by which the HVAC can also purify air coming in to the system.

In a vehicle the air recirculation unit sits between the HVAC and the Heat Water Air Separation (HWAS) unit. The air is drawn in from the exterior of the vehicle and passes through the HWAS. The HWAS is designed to prevent water from passing into the HVAC and comprises various design means to function in this way, for example by an air intake water wall.

The vehicle will also typically comprise a fire-wall which is designed to keep the engine separated from the interior of the vehicle in case of engine malfunction. The HWAS usually forms part of this juncture as it also comprises part of the overall design which separates exterior from the interior. The HWAS is connected to the HVAC at this point. In many designs, however, the actual connection is by way of an apparatus which also comprises an air recirculation valve.

Thus, the air intake receives air from the exterior, whether exterior to the apparatus or exterior to any device in which the apparatus is installed. The air drawn into the apparatus is ionised as it enters an ionising chamber and is then forced through the outlet as it exits the apparatus.

As well as providing improved ionising of the polluted air entering the vehicle the device of the invention is also more easily installed into pre-existing HVAC, HWAS designs on the market.

Preferably, the apparatus is installed in a self-driven vehicle, for example a motor vehicle such as a car or a bus, as well as another contained transport unit such as a cable car or such like.

Preferably, the fresh air intake comprises a peripheral frame defining a central air intake channel. The frame may be contiguous with or separable from the rest of the apparatus. Where it is separable from the apparatus it may be manufactured separately and attached to the rest of the apparatus during assembly.

The air intake comprises an ioniser. Ionisers are known in the art and are devised to produce an ion field during use when an electric current is supplied to an emitting electrode. Ions are thus generated in the ion field which is formed between the emitting electrode and the receiving electrode.

Preferably, the ioniser comprises one or more emitting electrodes and one or more receiving electrodes. The electrode set up is important when the apparatus is part of a larger device which has electrical circuitry. The apparatus must have an electromagnetic footprint which is contained within specific regulatory requirements to ensure that there is no interference with the device in which the apparatus forms part. The number of electrodes and the layout will be designed specifically with this in mind. The design will be such that there is the highest degree of ionisation for the lowest current.

Preferably, the ioniser comprises an array of emitting electrodes and an array of corresponding receiving electrodes. It is also possible for the ioniser to comprise a single receiving electrode and a plurality of emitting electrodes. Similarly, it is possible for the ioniser to comprise a single emitting electrode and a plurality of receiving electrodes. Preferably, the emitting electrodes are in the form of corona discharge points or brushes. Such are well known in the art.

Preferably, the ioniser comprises a receiving electrode disposed around an interior of said peripheral ring. In such an embodiment the receiving electrode forms part of the peripheral ring. This provides optimal use of space which is attractive to HVAC/HWAS designers as the ioniser thus requires no extra accommodation.

Preferably, the ioniser comprises an elongated emitting electrode disposed across the peripheral ring. In such a design, the emitting electrode is in the form of an elongate structure which comprise at least one, and preferably more, corona discharge tips.

Preferably, the emitting electrode is in the form of a rod, preferably a flattened rod or blade. Such a rod preferably comprises a flat portion formed by a pair of opposing faces connected by a pair of opposing edges. Preferably, the rod comprises a plurality of corona discharge tips on at least one and preferably both of the opposing edges. The device thus creates an ion field between the emitting electrodes and the receiving electrode through which the air passes through the apparatus.

The apparatus comprises a recirculation valve which may be in the form of a moveable flap for controlling the proportion of air passing through the intake. Such a flap is thus able to shut off air from entering the intake at all during use. Typically, this is movable between a closed and open position. When in a closed position, the air is instead circulated around the cabin. In such a position air is not ionised as it passes through the apparatus.

Preferably, the apparatus comprises a filter chamber for receiving a particulate filter. Preferably, the chamber is disposed after the ioniser in the direction of the air flow and is defined so that the filter can be easily replaced when required.

Preferably, the apparatus comprises a particulate filter. Such particulate filters are known in the art and comprise means for capturing particles as they pass through the apparatus and into the cabin of the vehicle.

Preferably, the particulate filter at least partially fills the air outlet. More preferably, when the particulate filter is in place it completely fills the outlet such that all the air passing through the device must pass through the particulate filter as it passes from the exterior of the apparatus, through the apparatus and out again into the cabin.

Preferably, the ioniser is separable from the rest of the apparatus. This allows the device to be removed for servicing or even to be added separately after sale.

Accordingly, and in a second embodiment, the invention relates to an ioniser as described above and for use in an apparatus as described herein.

Preferably, the ioniser comprises means for attachment with the remainder of the apparatus. The attachment may be snap fit, friction fit, or by other known means such as screws or adhesive, so long as it is separable.

Where the ioniser is separable it is preferred that the separable element comprises at least one emitting electrode, at least one receiving electrode and appropriate electrical connectivity to receive power from a power source. It should also comprise means for insertion and fit into the rest of the assembly, for example a perimeter of frame for maintaining structural integrity. The perimeter or frame may also constitute the whole or part of the receiving electrode or emitting electrode.

Embodiments of the invention will now be described with reference to the following figures in which figure 1 is a perspective of an apparatus according to the invention minus the ioniser and figure 2 is a perspective of an ioniser. Figures 3. 4 and 5 are cross sectional views of various apparatus configurations.

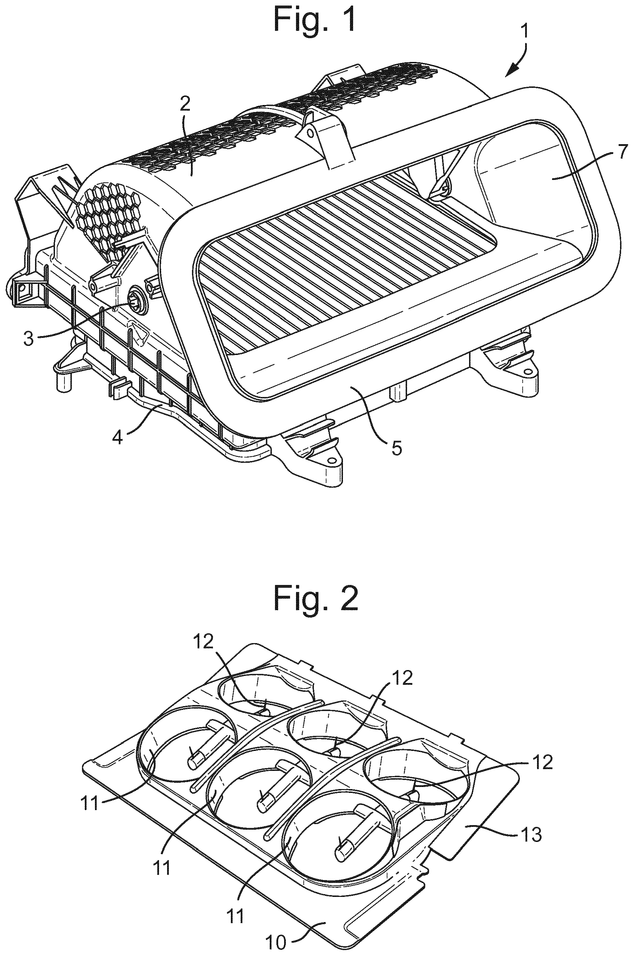

Figure 1 is a perspective view of an embodiment of the apparatus of the invention, minus the ioniser, and shows the apparatus (1) which sits after the HWAS and before the HVAC in a vehicle, none of which are shown.

The apparatus (1) consists of an air intake (7) through which air passes into the apparatus from the exterior and an outlet which is mostly hidden but is indicated by (4). The air intake is defined by a peripheral ring (5) which describes a suitable size for the HVAC. The air passes into the apparatus through the intake (7) and passes into a chamber, defined by the housing (2) and in which sits a recirculation valve shown by its pivot (3). The air recirculation valve closes when the driver of the vehicle requires less air to come from the exterior of the vehicle and thus recirculates air from within the vehicle.

The air then passes through a particulate filter (6) at the bottom of the apparatus (1) and then exits the apparatus through the outlet and into the HVAC.

Figure 2 shows a perspective of an ioniser (13) which is attachable to the air intake.

The ioniser (13) comprises a pair of three rows of ionising ducts each comprising an emitting electrode (12) and a receiving electrode (11) and fixed to a frame (10). When an electric voltage is fed to the emitting electrode an ionisation field is generated between the emitting electrode and the receiving electrode. As air passes from outside the vehicle into the apparatus, the pollutants are ionised before passing through a filter.

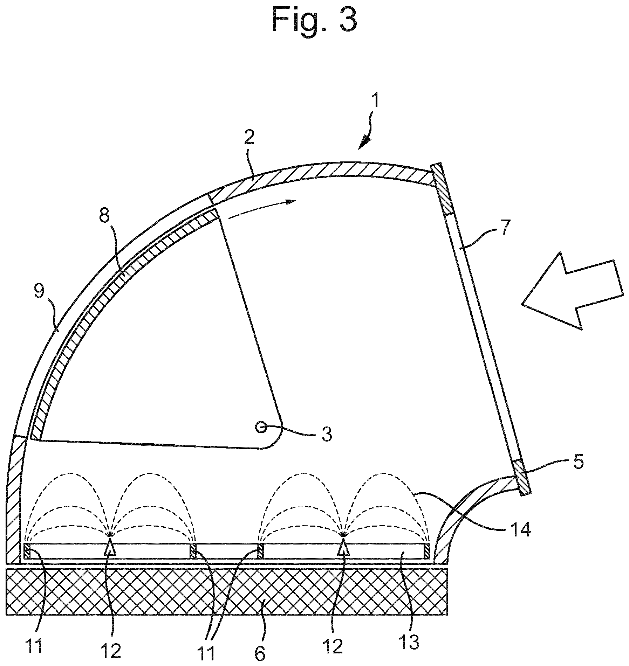

In figure 3 are shown an apparatus (1) with a housing (2) for the recirculation valve (8) which pivots around pivot point (3) and in this configuration closes recirculation opening (9) such that air cannot be recirculated from the car back into the car. Instead, air passes from the exterior through air inlet (7) defined by frame (5). The figure shows a particulate filter (6) at the outlet and an ioniser (13) placed above the outlet.

The ioniser (13) shows a pair of emitting electrodes (12) and a pair of receiving electrodes (11) and between which is generated an ion field (14) pointing towards the airflow direction (arrow).

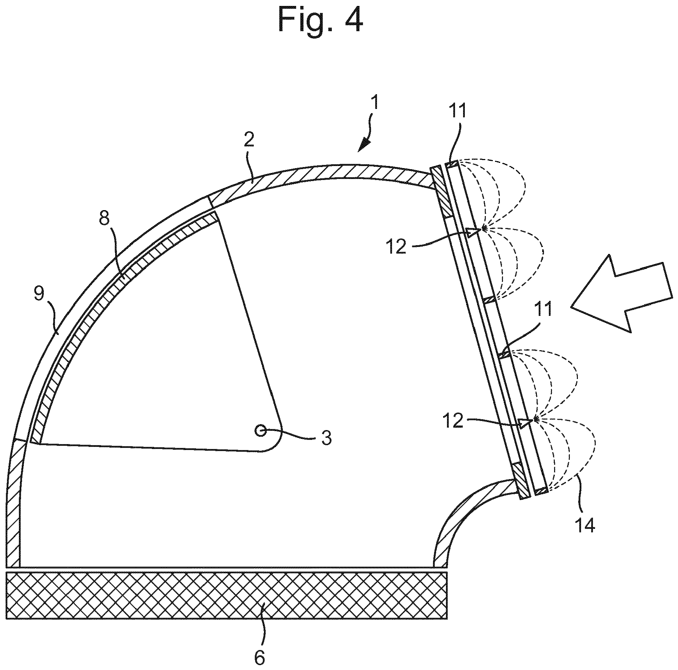

Figure 4 shows a similar configuration but instead of the ioniser (13) being placed above the air outlet, it is instead placed at the air intake 7 thus air is ionised as it enters the apparatus.

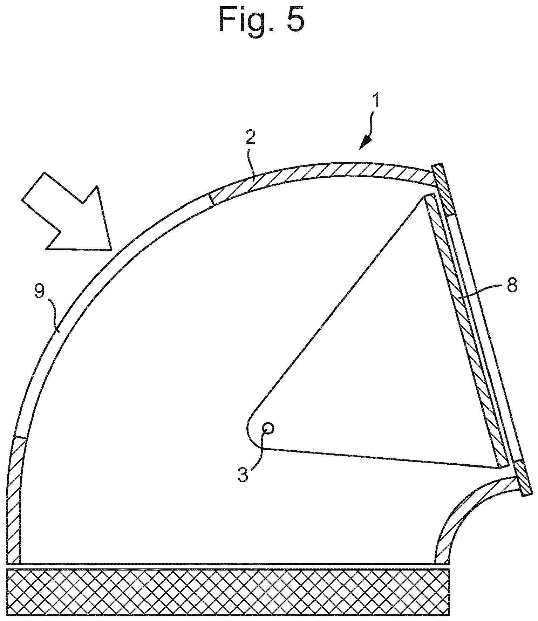

Figure 5 shows a similar embodiment without the ioniser for clarity showing how the recirculation valve is closed in certain instances by rotating around pivot (3). In this way air in prevented from entering the apparatus from the exterior and instead is recirculate from inside the vehicle.

## Claims

1. Apparatus for an air purifying system comprising a fresh air intake, an air outlet and a recirculation valve, said fresh air intake comprising an ioniser.

2. Apparatus according to claim 1 wherein the fresh air intake comprises a peripheral ring and a central air intake channel.

3. Apparatus according to claim 1 or 2 wherein the ioniser comprises one or more emitting electrodes and one or more receiving electrodes.

4. Apparatus according to any preceding claim wherein the ioniser comprises an array of emitting electrodes and an array of corresponding receiving electrodes.

5. Apparatus according to claim 2 or 3 wherein the ioniser comprises a receiving electrode disposed around an interior of said peripheral ring.

6. Apparatus according to claim 5 wherein the ioniser comprises an elongated emitting electrode disposed across the peripheral ring.

7. Apparatus according to claim 6 wherein the emitting electrode is in the form of a blade.

8. Apparatus according to any preceding claim comprising a moveable flap for controlling the proportion of air passing through the intake.

9. Apparatus according to any preceding claim comprising a particulate filter.

10. Apparatus according to claim 9 wherein the particulate filter at least partially fills the air outlet.

11. A vehicle comprising an apparatus according to any preceding claim.
